# EUROPÄISCHE PATENTANMELDUNG

(11) **EP 1 277 511 A1**
(43) Veröffentlichungstag der Anmeldung: **22.01.2003**
(21) Anmeldenummer: 02090266.4
(22) Anmeldetag: 18.07.2002
(51) Int. Cl.: B01D 71/02, B01D 69/08

(54) **Molekularsiebmembran auf Basis poröser Träger und Kristallisationsverfahren**

(30) Priorität: 19.07.2001 DE 10136621
(71) Anmelder: Institut für Angewandte Chemie Berlin-Adlershof E.V., 12489 Berlin (DE)
(72) Erfinder: Noack, Manfred, Dr., 12683 Berlin (DE); K-lsch, Peter, 10367 Berlin (DE); Sch-fer, Ronald, 12487 Berlin (DE); Caro, J-rgen, 13129 Berlin (DE); Weh, Kornelia, 12489 Berlin (DE); Toussaint, Petra, 12489 Berlin (DE)
(74) Vertreter: Walter, Wolf-Jürgen

(57) **Zusammenfassung**

Die Erfindung betrifft Molekularsiebmembranen auf Basis poröser Träger, insbesondere Rohrmembranen, die als Membranfilter für Flüssigkeiten und/oder Gase verwendet werden, sowie ein Verfahren zur Kristallisation von Molekularsiebmembranen auf porösen Trägern. Die Membran ist hergestellt durch Aufbringen der Molekularsiebschicht mit einer gleichmäßigen Schichtdicke auf wenigstens eine Funktionsoberfläche eines Trägers, der eine abnehmende Porengröße vom Inneren des Trägers zu der Funktionsoberfläche hat (asymmetrischer Schichtaufbau),
wobei der Träger mit einer geeigneten flüssigen Zusammensetzung einem wiederholten Wechsel von Flüssigkeits-und Dampfphase in einem geschlossenen System unterworfen wird, bei dem Dampf- und Flüssigphase sich in einem thermodynamischen Gleichgewicht befinden, für einen Zeitraum von 8 bis 100 Stunden bei einer Temperatur von 80 bis 200 °C und bei einem Druck von atmosphärischem Druck bis zu autogenem Druck des Systems. Es werden gleichmäßige Schichtdicken auch bei dünnen Rohrträgern im wesentlichen ohne Lecks in einem sehr wirtschaftlichen Verfahren erreicht.

## Beschreibung

Die Erfindung betrifft Molekularsiebmembranen auf Basis poröser Träger, insbesondere Rohrmembranen, die als Membranfilter für Flüssigkeiten und/oder Gase verwendet werden, sowie ein Verfahren zur Kristallisation von Molekularsiebmembranen auf porösen Trägern.

Bei der Trocken-Kristallisation wird ein Synthesegel aus Silikat, Aluminat und Alkali-Komponenten ein oder mehrfach auf einen Träger aufgetragen und dort getrocknet. Dieser gelbeladene Träger wird in den Dampfraum eines Autoklaven gebracht, ohne Kontakt zur Flüssigphase des Wassers und/oder des Templats zu haben und wird hydrothermal über die Einwirkung der Dampfphase kristallisiert. Der Vorteil besteht in der hohen Bausteinkonzentration auf dem Träger, die der Dichte der Molekularsieb-Schicht nahe kommt. Der Nachteil ist häufig die Bildung nicht phasenreiner Molekularsieb-Schichten.

Bei der nassen Gel-Kristallisation wird ein Synthesegel aus Silikat, Aluminat und Alkali-Komponenten mit Wasser (und Templat) im Autoklav hydrothermal zur Kristallisation gebracht. Das Gel hat eine Dichte von 1,3-1,4, die Molekularsieb-Kristalle von 2-2,3 g/cm³. Diese Materialverdichtung erfordert einen intensiven Bausteintransport zu den Kristallkeimen in der wäßrigen Lösung bzw. die Verdrängung des Wassers am Kristallisationsort.

Sollen lange, enge Rohre (Kapillaren, Ein- oder Mehrkanalrohre) oder geschlossene Module innen mit Molekularsieb-Schichten bedeckt werden, können Konzentrations- und Wärmeschichtungen zu ungleichem Bausteintransport und ungleichen Kristallschichten führen. Dafür gefundene technische Lösungen durch Bewegung des Synthesegels gegenüber dem Träger wie Schütteln oder Pumpen bringen gewisse Verbesserungen, sind jedoch nicht vollbefriedigend.

Der Erfindung liegt die Aufgabe zugrunde, Molekularsiebmembranen mit phasenreiner Schicht entsprechend dem gewählten Molekularsiebtyp und gleichmäßiger Schichtdicke der Molekularsiebschicht auf dem Träger, insbesondere in Innenräumen von langen Rohren, bereitzustellen sowie ein Kristallisationsverfahren mit merklich verbesserter Wirtschaftlichkeit.

Diese Aufgabe wird gelöst durch eine Molekularsiebmembran auf Basis poröser Träger mit einer darauf befindlichen Molekularsiebschicht, die dadurch gekennzeichnet ist, daß die Molekularsiebmembran hergestellt ist durch Aufbringen der Molekularsiebschicht mit einer gleichmäßigen Schichtdicke auf wenigstens eine Funktionsoberfläche eines Trägers, der eine abnehmende Porengröße vom Inneren des Trägers zu der Funktionsoberfläche hat (asymmetrischer Schichtaufbau),
wobei der Träger wenigstens für den Bereich der Funktionsoberfläche mit einer für die Molekularsiebsynthese geeigneten flüssigen Zusammensetzung einem wiederholten Wechsel von Flüssigkeits- und Dampfphase in einem geschlossenen System unterworfen wird, bei dem Dampf- und Flüssigphase sich in einem thermodynamischen Gleichgewicht befinden, für einen Zeitraum von 8 bis 100 Stunden bei einer Temperatur von 120 bis 200 °C und bei einem Druck von atmosphärischem Druck bis zu autogenem Druck des Systems.

Durch den von der Erfindung konzipierten langsamen Wechsel von Flüssigkeits- und Dampfphase im Bereich des Trägers, zumindest jedoch im Bereich der Funktionsoberfläche, wird diese Fläche in der Zeit, wo die Flüssigkeitsphase sie bedeckt, gleichmäßig intensiv mit Kristallbausteinen versorgt. In der "Trockenphase", d.h. in der Zeit der Bewegung, wo die Funktionsoberfläche nur der Dampfphase ausgesetzt ist, tritt eine Übersättigung auf, die das Kristallwachstum beschleunigt. Selbst differentielle Änderungen des Wassergehalts in der Gelphase durch partielle Verdampfung bewirken diese Übersättigung und die sekundäre Keimbildung auf dem Träger. Andererseits befindet sich das wäßrige Synthesegel stets im Kristallisationsfeld des gewünschten Molekularsiebtyps, so daß die gewählte Zeolithphase gebildet wird (anders als bei der Trockengel-Kristallisation).

Vorzugsweise ist der Träger ein keramisches offenporiges Material, kann jedoch auch ein poröses metallisches Material oder ein poröser Kohlenstoff-Formkörper sein. Das keramische Material ist vorteilhaft ein solches auf Basis von Aluminiumoxid, Siliciumdioxid, Zirkoniumoxid, Titaniumoxid oder entsprechenden Oxidgemischen. Es können auch Si-Nitrid oder Si-Carbid oder poröse metallische Rohrträger z.B. aus V2A oder V4A (Sinterkerzen) eingesetzt werden.

Besonders bevorzugt ist der Träger ein Rohr, ein Multikanalrohr, eine Kapillare, ein System von Kapillaren, ein geschlossenes Modul oder eine Kombination davon.

Wenn sich die zu behandelnde Oberfläche im Inneren des Rohres, des Multikanalrohres oder der Kapillare befindet, bei einem Längen-Durchmesserverhältnis > 10, sind die bisherigen Beschichtungsverfahren meist unbefriedigend verlaufen, da entweder zu unregelmäßige Schichtdicken mit zu vielen Lecks entstanden sind oder eine ausreichende Versorgung mit den Kristallisationsbildner nicht gewährleistet war. Das Aufbringen der Molekularsiebmembran mit dem neuen Verfahren zeigt besonders gute Ergebnisse bei den o.g. Oberflächen, wobei der Innendurchmesser der rohrförmigen Elemente bevorzugt im Bereich von 1 bis 50 mm liegt. Insbesondere im Bereich von 1 bis 14 mm, speziell 1-5 mm, also bei sehr dünnen Rohren bzw. Kapillaren, zeigt sich der besondere Vorteil der Erfindung, gleichmäßige Schichtdicken im wesentlichen ohne Lecks zu erreichen. Vorteilhaft kann das Rohr, das Multikanalrohr, die Kapillare, das System von Kapillaren oder Kombinationen davon eine Länge von wenigstens 15 cm haben, insbesondere 30-120 cm. Es können jedoch auch problemlos kürzere Teile in der beschriebenen Weise beschichtet werden.

Unter dem Begriff "Funktionsoberfläche" wird diejenige Oberfläche bzw. die Oberflächen eines offenporigen Formkörpers verstanden, die die Filter-Funktion des Trägers in seiner Anwendung als Trennmembran für Flüssigkeiten und/oder Gase und/oder Dämpfe übernimmt. Es ist die Oberfläche, die dem Feed oder dem Permeat eines zu trennenden flüssigen oder gasförmigen Stoffsystems zugewandt ist. Es ist zugleich die feinporigste Schicht eines Formkörpers mit asymmetrischem Schichtaufbau.

Unter dem Begriff "asymmetrischer Schichtaufbau" wird ein Aufbau verstanden, der ausgehend vom grobporigen Grundkörper eine zu einer Seite hin abnehmende Porengröße hat, so daß die Poren an der Oberfläche der äußersten Schicht einer Seite den kleinsten Durchmesser aufweisen. Diese äußerste Schicht stellt zugleich die Funktionsseite des Körpers dar. Die Porengröße in der äußersten Schicht liegt etwa im Bereich von 5 bis 1000 nm, vorzugsweise 5-200 nm. Auf dieser äußersten Schicht erfolgt die Abscheidung der Molekularsiebmembran.

Das Molekularsieb ist vorteilhaft ein solches vom Typ LTA, ERI (Erionit), MOR (Mordenit), CHA, FAU (Faujasit X, Y, ZSM-20), MFI (ZSM-5) oder MEL (s.a. Atlas of Zeolithe Structure Types, Meier, W.M., Olson, D.H., London 1992.

Für die Bildung derartiger Molekularsiebe werden entsprechend zusammengesetzte Synthesegele aus Silikat, Aluminat, Alkali-Komponenten und Templaten eingesetzt.

Die Erfindung betrifft auch ein Verfahren zur Kristallisation von Molekularsiebmembranen auf porösen Trägern, bei dem wenigstens eine Funktionsoberfläche des Trägers, der eine abnehmende Porengröße vom Inneren des Trägers zu der Funktionsoberfläche hat (asymmetrischer Schichtaufbau), mit einer für die Molekularsiebsynthese geeigneten flüssigen Zusammensetzung in einem geschlossenen System derart in Kontakt gebracht wird, daß ein wiederholter Wechsel von Flüssigkeits-und Dampfphase wenigstens für den Bereich der Funktionsoberfläche erfolgt,
wobei Dampf- und Flüssigphase sich in einem thermodynamischen Gleichgewicht befinden, und wobei der Zeitraum der Behandlung im Bereich von 8 bis 100 Stunden bei einer Temperatur von 80 bis 200 °C und bei einem Druck von atmosphärischem Druck bis zu autogenem Druck des Systems liegt.

Der wiederholte Wechsel von Flüssig- und Dampfphase für die zu behandelnden Oberflächen erfolgt vorteilhaft 0,2 bis 15 Mal pro Minute, vorzugsweise 1 bis 10 Mal, insbesondere 3 bis 5 Mal pro Minute. Ein solcher Wechsel kann beispielsweise durch Installation des geschlossenen Behälters auf einem Taumelrüttler erfolgen, der diese sehr langsame Bewegung durchführt,
wobei die Taumelbewegung noch durch eine Drehung des Behälters um seine Längsachse mit ca. 1 U/min überlagert werden kann, so daß alle Teile des Rohres sich gleichmäßig abwechselnd in der Flüssig- oder Dampfphase befinden. Dabei ist der Behälter zu etwa 30 bis 90 % seines freien Volumens mit dem Synthesegel gefüllt.

Der Wechsel von Flüssigkeits- und Dampfphase wird somit durch wechselseitiges Eintauchen des Trägers in die flüssige Molsiebzusammensetzung und Auftauchen des Trägers aus dieser Zusammensetzung ermöglicht.

Die Behandlungszeit kann vorteilhaft im Bereich von 10-90 Stunden, insbesondere von 24-72 Stunden liegen.

Bei dem Molekularsiebsystem, die bei der Abscheidung auf dem Träger einen autogenen Druck aufbauen bei Temperaturen oberhalb etwa 95 °C, ist der Behälter ein entsprechend der Form des Formkörpers angepaßter Autoklav.

In einer besonderen Ausführungsform des Verfahrens kann den wiederholten Wechseln von Flüssig- und Dampfphase eine Ruhephase vorgeschaltet sein, in der die Flüssigphase die Funktionsoberfläche vollständig bedeckt. Die Ruhephase hat einen Anteil im Bereich von 3 bis 10 % der Gesamtbehandlungszeit.

Eine weitere Ausführungsform der Erfindung besteht darin, das Synthesegel in das Synthesegefäß mit den Rohrträgern oder in den Modul alternierend bis zum vollen Füllstand nineinzupumpen oder diese soweit völlig zu entleeren, daß kein Flüssigkeitskontakt zu den Trägern besteht, um einen wiederholten Wechsel von Flüssigkeits-und Dampfphase im Bereich der zu beschichtenden Funktionsoberfläche des Trägers zu bewirken.

Bei der Synthese im bewegten Reaktionsgefäß oder bei umgepumptem Synthesegel wird das Kristallwachstum und die sekundäre Keimbildung beschleunigt, so daß überwiegend kleine Kristalle ungeordnet in der Schicht zusammenwachsen.

In einer weiteren Ausführungsform kann eine Vorbehandlung des Trägers durch Auftragen von Keimkristallen (Seed) des entsprechenden Molekularsiebtyps erfolgen und anschließend - nach dem Ausheizen des Seed-beschichteten Trägers bei 400 bis 600 °C - aus wäßrigen verdünnten Gelen auf den Seed-beladenenen Trägern das erfindungsgemäße Verfahren durchgeführt werden. Der Vorteil von Trägern mit Seedkristallen besteht in dem gezielten phasenreinen Kristallwachstum auf dem Träger bei weitgehender Unterdrückung sekundärer Keimbildung in der Volumenphase. Dabei ist eine begrenzte Beeinflussung der Kristallorientierung in der Schicht und die Bildung dünner Kristallschichten möglich.

In einer weiteren Ausführungsform der Erfindung kann eine Behandlung nur auf der Feedseite eines geschlossenen Moduls erfolgen und damit ein gezielter Aufbau der Molekularsiebschicht allein an dieser Stelle gewährleistet werden.

Nach der Beschichtung gemäß dem erfindungsgemäßen Verfahren wird der beschichtete Träger in üblicher Weise bei Temperaturen im Bereich von 400 bis 550 °C in Luft oder oxidierenden Gasgemischen ausgeheizt, um das Templat thermisch zu zersetzen um das zeolithische Porensystem transportaktiv zu machen.

Die besonderen Vorteile der erfindungsgemäßen Molekularsiebmembran und des entsprechenden Herstellungsverfahrens bestehen darin, daß durch den Wechsel von "Trockenphase" und "Gelphase" die bereits weiter oben angegebenen Vorgänge auftreten, nämlich erfolgt in der Trockenphase der Bewegung eine Übersättigung, die das Kristallwachstum beschleunigt und eine sekundäre Keimbildung auf dem Träger bewirkt. Weiterhin werden alle Teile des Trägers (mit oder ohne Seeds) gleichmäßig intensiv mit Kristallbausteinen versorgt, was letzten Endes zu der sehr gleichmäßigen Schicht auf der feinporigen Oberfläche des Trägers führt. Die Kristallisation erfolgt auch gleichmäßig in geschlossenen Modulen oder engen Rohren, was bei den bisher bekannt gewordenen Membranen bzw. in der Literatur beschriebenen Verfahren regelmäßig nicht gewährleistet war.

Die Wirtschaftlichkeit des Verfahrens wird insofern deutlich verbessert, indem die Kristallisationszeit verringert wird und/ oder die Kristallisation bei verminderter Temperatur erfolgen kann. Darüber hinaus wird erheblich weniger Kristallisationsgel benötigt. Die Einsparung beträgt etwa 30-75 % je nach Molekularsiebtyp und Verfahrensführung. Dazu trägt auch insbesondere bei, daß die Kristallisation überwiegend auf dem Träger erfolgt und nicht unkontrolliert an den Wandungen des Behälters und im Gelvolumen, wo bisher bis zu 95 % aller Kristalle entstanden.

Die neuen Molekularsieb-Membranen zeigen eine hohe Selektivität wegen der geringen Leckdichte in der Zeolithschicht.

Die Membranen sind lösungsmittelstabil und thermisch bis 550 °C belastbar. Die Beständigkeit gegen höheren thermischen Stress ist wahrscheinlich darauf zurückzuführen, daß kleine ungeordnete Kristalle in der Schicht die thermischen Spannungen partiell ausgleichen.

Die Anwendung der neuen Membranen ist in erster Linie auf die Trennung gasförmiger, dampfförmiger und flüssiger Gemische durch Flüssig-/Gaspermeation, Pervaporation und Dampfpermeation gerichtet.

Eine weitere Anwendung dieser Membranen kann zur Erhöhung von Ausbeute und Selektivität durch Einsatz in einem Membranreaktor in Kombination mit einem Katalysator oder in der katalytisch aktiven Form der Molekularsieb-Membran erfolgen.

Die Erfindung soll nachstehend durch Beispiele näher erläutert werden.

### Beispiel 1

### MFI-Innenrohrbeschichtung von Einkanal-Keramikrohren

Es werden Einkanal-Keramikrohre mit einem Innendurchmesser øᵢ 7 mm, Länge 30-50 cm aus α-Al₂O₃ mit asymmetrischem Schichtaufbau (Poren 1 µm im Trägerinneren, 60 nm an innen liegender MF-Schicht, d.h. in der äußersten Schicht auf der Funktionsseite) werden außen mit Teflonband bewickelt, innen mit MFI-Seeds beschichtet und ohne Teflonband bei 400°C in Luft ausgeheizt. Das Templat für das MFI-Seed besteht aus Tetrapropylammoniumhydroxid (TPAOH).
Danach wird der Seed-bedeckte Träger erneut außen mit Teflonband beweickelt und in einen Teflon ausgekleideten Autoklaven gebracht, der mit dem Synthesegel für die MFI-Synthese z. B. einer Zusammensetzung
100 SiO₂ : 6 TPAOH : 0,5 Na₂O : 2000 H₂O
mit dem halben Autoklavenvolumen gefüllt wird. Das Rohr wird auf Teflonspitzen so gelagert, daß das Gel ungehindert das Innenrohr durchfließen kann. Der Autoklav wird in einen Ofen auf einem Taumelrüttler gebracht, so daß die Kristallisation bei einer langsamen Taumelbewegung von ca. 3-10-maliger Bewegung/min unter hydrothermalen Bedingungen bei 170°C und autogenem Druck abläuft. Zusätzlich wird der Taumelbewegung eine Drehung des Autoklaven um seine Längsachse überlagert mit ca. 1 U/min, so daß alle Teile des Rohres sich gleichmäßig in der Flüssig- oder Dampfphase befinden.

Nach 48 h ist eine gleichmäßige MFI-Kristallschicht an der Innenseite des Rohres entstanden. Das MFI-bedeckte Trägerrohr wird bei 400 °C in Luft erhitzt, um das blockierende Templat auszubrennen.

Das Rohr wird in einem Trennvorgang eingesetzt, bei dem ein n-/i-Pentangemisch bei 130°C mit einem Trennfaktor n-/i-Pentan von 20-30 getrennt wird bei einem H2-Fluß von ca. 500-1500 l(STP)/m² h bar.

### Beispiel 2

### MFI-Innenbeschichtung eines 19-Kanalrohres

Ein keramisches 19-Kanalrohr mit ø_{außen} 25 mm, Durchmesser der Innenrohre 3 mm, Länge 30-50 cm, aus α-Al₂O₃ mit einer Porengröße von 60-200 nm auf der Innenseite der einzelnen Rohre (Funktionsoberfläche) wird außen mit Teflonband bewickelt. Danach wird das Rohr innen mit MFI-Seeds beschichtet und nach dem Ausbrand bei 400-500°C in Luft im Autoklaven so gelagert, daß alle Innenrohre frei zugänglich für das Synthesegel der Zusammensetzung vom Beispiel 1 sind.

Der Autoklav wird mit 60% seines Volumens gefüllt und in einem Wärmeschrank langsam d. h. 0,1-1 U/min um eine Achse quer zu seiner Längsausdehnung bei einer Synthesetemperatur zwischen 150-190°C gedreht. Nach Ablauf von 38 h wird nach dem Abkühlen das MFI-beschichtete Multikanalrohr entnommen, mit Wasser gespült, bei 400°C in Luft ausgebrannt.

Das Multikanalrohr wird für die Gas-/ Dampfpermeation von Gemischen von a) n-/i-Butane, b) n-/i-Butene, c) H₂/i-Butan und d) H₂/SF₆ eingesetzt. Es werden Flüsse für Wasserstoff von 0,2 bis 2 Nm³/m² h bar erzielt.

### Beispiel 3

### Geschlossener keramischer Modul

Ein geschlossener keramischer Modul mit Multikanalrohren wird nach dem Beispiel 2 - Innenseedbeschichtung - in einem templatfreien Synthesegel mit einem Anteil Al₂O₃ der Zusammensetzung
100 SiO₂ : Al₂O₃: 28 Na₂O : 4000 H₂O auf einem Taumelrüttler mit 4 Taumelbewegungen pro Minute und einer Drehbewegung um die Horizontale in einem Wärmeschrank bei einem Füllvolumen von 70% des Autoklaven mit Zeolith MFI beschichtet. Man erhält eine gleichmäßige Kristallschicht von MFI-Kristallen mit einem Si/Al-Verhältnis von 50 (templatfreie Synthese). Nach 48 h wird das Synthesegel entfernt, der Modul mehrfach mit Wasser gespült und bei 120°C getrocknet und kann ohne weitere thermische Behandlung zur Permeation eingesetzt werden.

Mit einem solchen ZSM-5 beschichteten Mehrkanalmodulen gelingt die Wasserabtrennung bei der Pervaporation aus i-Propanol mit Trennfaktoren α_{H2O/i-Propanol} von 100-300.
Bei der Methanol/MTBE-Trennung erreicht man mit diesem Modul Trennfaktoren α_{Methanol/MTBE} > 300.

### Beispiel 4

### Module mit keramischen Hohlfasern

Die Zeolith-Beschichtung von Modulen mit keramischen Hohlfasern mit einem Innendurchmesser ≤ 1 mm kann sinnvoll außen erfolgen, wenn der Kapillarenabstand etwa 1 mm allseitig ist. Es werden dabei vorteilhaft Seeds zur Außenbeschichtung eingesetzt. Ohne Seeds erfolgt in diesem Beispiel die in situ-Kristallisation mit konzentrierteren Gelen der Zusammensetzung
90 SiO₂ : 3 TPAOH : 3 Na₂O : 900 H₂O
bei 150-160°C in 40 h.
Der Modul wird im Autoklaven, mit ca. 50% des Autoklavenvolumens mit Synthesegel gefüllt und besonders langsam mit 1-3 Bewegungen des Taumelrüttlers mit überlagerter Drehbewegung um seine Längsachse mit 0,1-1 U/min bei der Synthese bewegt.
Nach Erkalten und Entfernen des Synthesegels wird der Modulinnenraum mehrfach sorgfältig mit dest. Wasser gespült. Sowohl beim Trocknen als auch der thermischen Templatzersetzung ist der Modul innen mit Luft zu spülen z.B. 10-30 l/ min.

Solche Kapillarmodule sind für die Gas- und Dampfpermeation geeignet, jedoch nicht für die Pervaporation wegen der Konzentrations-und Wärmepolarisation. Für einen störungsfreien Betrieb ist eine Mikrofiltrationseinheit zum Rückhalt von Partikeln erforderlich.

### Beispiel 5

### Ruhende und bewegte Synthese I

Es wird wie im Beispiel 1 gearbeitet, jedoch nach Füllung des Autoklaven zu 60 % seines Volumens mit dem MFI-Synthesegel und Lagerung des Autoklaven derart, daß die Funktionsoberflächen des Seed-beschichteten Rohres vom Synthesegel vollständig bedeckt sind und dieser für 3,5 Stunden in dieser Position belassen wird. Danach erfolgt für einen Zeitraum von 40 Stunden eine Taumelbewegung mit 4 Taumelbewegungen pro Minute bei einer Temperatur von 175 °C und autogenem Druck.

### Beispiel 6

### Ruhende und bewegte Synthese II

Es wird wie im Beispiel 2 gearbeitet, jedoch nach Füllung des Autoklaven zu 65 % seines Volumens mit dem MFI-Synthesegel von Beispiel 1 und Lagerung des Autoklaven derart, daß die Funktionsoberflächen des nicht mit Seed beschichteten Rohres vom Synthesegel vollständig bedeckt sind. Der Autoklav wird für 4 Stunden in dieser Position belassen. Danach erfolgt die Taumelbewegung bei einer Temperatur von 165 °C und autogenem Druck für 72 Stunden.

Das erhaltene MFI-beschichtete Multikanalrohr wird entnommen, mit Wasser gespült und bei 400°C in Luft ausgebrannt.

Das Multikanalrohr wird für die Gas-/Dampfpermeation von Gemischen von H₂/i-Butan eingesetzt, wobei man eine n Fluß von 1,4 Nm³/m² h bar erzielt.

## Patentansprüche

1. Molekularsiebmembran auf Basis poröser Träger mit einer darauf befindlichen Molekularsiebschicht,
**dadurch gekennzeichnet, daß** die Molekularsiebmembran hergestellt ist durch Aufbringen der Molekularsiebschicht mit einer gleichmäßigen Schichtdicke auf wenigstens eine Funktionsoberfläche eines Trägers, der eine abnehmende Porengröße vom Inneren des Trägers zu der Funktionsoberfläche hat (asymmetrischer Schichtaufbau),
wobei der Träger wenigstens für den Bereich der Funktionsoberfläche mit einer für die Molekularsiebsynthese geeigneten flüssigen Zusammensetzung einem wiederholten Wechsel von Flüssigkeits-und Dampfphase in einem geschlossenen System unterworfen wird, bei dem Dampf- und Flüssigphase sich in einem thermodynamischen Gleichgewicht befinden, für einen Zeitraum von 8 bis 100 Stunden bei einer Temperatur von 80 bis 200 °C und bei einem Druck von atmosphärischem Druck bis zu autogenem Druck des Systems.

2. Molekularsiebmembran nach Anspruch 1, **dadurch gekennzeichnet, daß** der Träger ein offenporiges keramisches, metallisches oder Kohlenstoff-Material ist.

3. Molekularsiebmembran nach Anspruch 1 oder 2, **dadurch gekennzeichnet, daß** der Träger ein Rohr, ein Multikanalrohr, eine Kapillare, ein System von Kapillaren, ein geschlossenes Modul oder eine Kombination davon ist.

4. Molekularsiebmembran nach Anspruch 1, **dadurch gekennzeichnet, daß** sich die behandelte Oberfläche im Inneren oder auf dem Äußeren des Rohres, des Multikanalrohres oder der Kapillare befindet, wobei der Innendurchmesser der rohrförmigen Elemente im Bereich von 1 bis 50 mm liegt, vorzugsweise im Bereich von 1 bis 14 mm.

5. Molekularsiebmembran nach Anspruch 3, **dadurch gekennzeichnet, daß** das Rohr, das Multikanalrohr, die Kapillare, das System von Kapillaren oder Kombinationen davon ein Längen-Durchmesser-Verhältnis >10 haben.

6. Molekularsiebmembran nach Anspruch 1, **dadurch gekennzeichnet, daß** der Träger Molekularsieb-Keimkristalle auf der Funktionsoberfläche trägt, die vor oder während der Synthese abgeschieden wurden.

7. Molekularsiebmembran nach Anspruch 1, **dadurch gekennzeichnet, daß** das Molekularsieb ein solches vom Typ LTA, ERI (Erionit), MOR (Mordenit), CHA, FAU (Faujasit X, Y, ZSM-20), MFI (ZSM-5) oder MEL ist.

8. Molekularsiebmembran nach Anspruch 1, **dadurch gekennzeichnet, daß** der wiederholte Wechsel von Flüssig- und Dampfphase für die zu behandelnden Oberflächen 0,2 bis 15 Mal pro Minute erfolgt, vorzugsweise 1 bis 5 Mal pro Minute.

9. Molekularsiebmembran nach Anspruch 8, **dadurch gekennzeichnet, daß** den wiederholten Wechseln von Flüssig- und Dampfphase eine Ruhephase vorgeschaltet ist, in der die Flüssigphase die Funktionsoberfläche vollständig bedeckt, wobei die Ruhephase einen Anteil im Bereich von 3 bis 10 % der Gesamtbehandlungszeit hat.

10. Verfahren zur Kristallisation von Molekularsiebmembranen auf porösen Trägern, **dadurch gekennzeichnet, daß** wenigstens eine Funktionsoberfläche des Trägers, der eine abnehmende Porengröße vom Inneren des Trägers zu der Funktionsoberfläche hat (asymmetrischer Schichtaufbau), mit einer für die Molekularsiebsynthese geeigneten flüssigen Zusammensetzung in einem geschlossenen System derart in Kontakt gebracht wird, daß ein wiederholter Wechsel von Flüssigkeits-und Dampfphase wenigstens für den Bereich der Funktionsoberfläche erfolgt, wobei Dampf- und Flüssigphase sich in einem thermodynamischen Gleichgewicht befinden, und wobei der Zeitraum der Behandlung im Bereich von 8 bis 100 Stunden bei einer Temperatur von 80 bis 200 °C und bei einem Druck von atmosphärischem Druck bis zu autogenem Druck des Systems liegt.
